# EUROPÄISCHE PATENTSCHRIFT

(11) **EP 2 945 810 B1**
(45) Veröffentlichungstag und Bekanntmachung des Hinweises auf die Patenterteilung: **11.07.2018**
(21) Anmeldenummer: 13802036.7
(22) Anmeldetag: 06.12.2013
(51) Int. Cl.: B60G 9/02, B60B 35/18, B60B 35/04, B60B 35/02, B60B 35/00

(54) **STARRACHSE ALS NICHT ANGETRIEBENE HINTERACHSE EINES KRAFTFAHRZEUGS**
SOLID AXLE AS NON-DRIVEN REAR AXLE OF A MOTOR VEHICLE
ESSIEU RIGIDE COMME ESSIEU NON MOTEUR D'UN VEHICULE

(30) Priorität: 17.01.2013 DE 102013200694
(43) Veröffentlichungstag der Anmeldung: 25.11.2015
(73) Patentinhaber: Bayerische Motoren Werke Aktiengesellschaft, 80809 München (DE)
(72) Erfinder: SCHOLZ, Hubert, 81543 München (DE); SEETHALER, Ludwig, 85241 Hebertshausen (DE)
(86) Internationale Anmeldenummer: PCT/EP2013/075762
(87) Internationale Veröffentlichungsnummer: WO 2014/111199

(56) Entgegenhaltungen:
- EP-A1- 2 106 935
- DE-A1- 1 948 908
- DE-A1- 2 318 231
- DE-A1- 2 751 997
- DE-A1- 3 121 453
- DE-A1- 19 748 250
- DE-A1- 19 946 724
- DE-C1- 4 235 632
- DE-U- 6 602 415
- FR-A1- 2 509 233
- GB-A- 2 274 629
- US-A- 2 746 766
- US-A- 3 231 040
- US-A- 5 758 898
- US-A- 6 042 131
- US-A1- 2009 127 812

## Beschreibung

Die Erfindung betrifft eine Starrachse als nicht angetriebene Hinterachse eines Kraftfahrzeugs mit einem durch vier gummigelagerte Stablenker gegenüber dem Fahrzeugaufbau geführten Achskörper nach dem Oberbegriff des Anspruchs 1. Zum Stand der Technik wird insbesondere auf die DE 197 48 250 A1 und die DE 66 02 415 U verwiesen; weiterhin sei die US 3,231,040 A genannt als ein Beispiel für auch für Fahrzeug-Achsen grundsätzlich bekannte Gummilager mit bei zunehmender Verformung überproportionaler Steifigkeitszunahme.

Ein Stablenker stellt bekanntlich ein auf Zug/Druck belastetes und im wesentlichen biegesteifes Bauelement (anders als ein sog. Schwertlenker) dar, welches an seinen beiden Enden über ein Kugelgelenk oder ein elastokinematisch gleichwertiges Gummilager am Fahrzeug-Aufbau und am Achskörper gelagert ist. Beispielsweise zeigt die EP 0 502 310 B1 neben vier Lenkern, von denen nur zwei in Form von "reinen" Stablenkern ausgebildet sind, zusätzlich einen der Querführung dienenden Querverbindungsstab. Einen ähnlich wirkenden Panhardstab weist auch eine weitere bekannte Starr-Hinterachse mit vier Stablenkern des Typs 33/1,5 der Fa. Alfa-Romeo (vgl. bspw. Reimpell "Fahrwerktechnik: Radaufhängungen") auf, ebenso wie die (angetriebene) De-Dion-Achse des Rover 2000 (1963). Starrachsen ohne einen Querführungsstab, bei denen folglich zumindest zwei der vier radführenden vorrangig in Fahrzeugs-Längsrichtung orientierten Stablenker in einer Projektion auf die Fahrbahn gegenüber der Fahrzeug-Längsachse geneigt, d.h. gepfeilt verlaufen, sind aber auch bekannt, vgl. bspw. die bereits genannte DE 197 48 250 A1, wonach sämtliche Lenker in Fahrzeug-Fahrtrichtung (nach vorne) verlaufen.

Für neuere insbesondere leicht bauende Personenkraftwagen mit Elektroantrieb oder Hybridantrieb ist ein besonders leicht bauendes Hinterachskonzept erwünscht.

Zum Einsatz kommen heute hierfür Verbundlenkerachsen oder blattfedergeführte Starrachsen, welche zwar jeweils den Vorteil geringen Gewichts, jedoch nur beschränkte Möglichkeiten bieten, eine komfortable Längsfederung darzustellen, ohne die fahrdynamischen Eigenschaften zu beeinträchtigen. Grundsätzlich sind geringe Steifigkeiten der radführenden Gummilager günstig für den Fahrkomfort, führen aber insbesondere bei Verbundlenkerachsen unter Seitenkraft-Einfluss oder insbesondere bei den bekannten Starrachsen unter Einwirkung einseitiger Bremskraft zu Nachspureffekten, was sich ungünstig auf die Fahrstabilität auswirkt.

Zwar sind verbesserte Verbundlenkerachsen, welche unter Seitenkraft in Vorspur gehen, bekannt (vgl. bspw. die WO 2010/000363 A1), jedoch sind diese Lösungen relativ aufwändig. Mit einfachen Starrachsen lässt sich daher insbesondere an einer nicht angetriebenen Hinterachse ein möglichst geringes Gewicht erzielen, wobei jedoch mit radführenden Längs-Blattfedern keine ausreichend komfortable Längsfederung darstellbar ist. Vorzuziehen ist daher eine möglichst einfache und deshalb über nur vier zumindest fahrzeugaufbauseitig gummigelagerte Stablenker geführte Starrachse, bspw. so wie dies die eingangs genannte DE 66 02 415 U zeigt.

Bereits erwähnt wurden weitere Anforderungen an eine günstige Starrachse, so neben einer komfortablen Längsfederung insbesondere eine gewisse Neigung zum Untersteuern, d.h. zu stabilisierenden Vorspuränderungen unter am Rad angreifenden Längs- und Seitenkräften, insbesondere auch bei einseitig wirkender Bremskraft. Im Hinblick hierauf sollen nun für eine Fahrzeugachse nach dem Oberbegriff des Anspruchs 1 geeignete Maßnahmen aufgezeigt werden (= Aufgabe der vorliegenden Erfindung).
Die Lösung dieser Aufgabe ergibt sich mit den kennzeichnenden Merkmalen des Anspruchs 1.

Die hier vorgeschlagene Radführung weist somit einen starren Achskörper auf, der den linken und rechten Radträger miteinander verbindet und von insgesamt vier Stablenkern geführt wird, die in Draufsicht (Ansicht von oben auf die Fahrbahn) im wesentlichen V-förmig angestellt sind, um jeweils sowohl Längskräfte als auch Seitenkräfte abstützen zu können. Da sich die am Rad angreifenden Längskräfte und Seitenkräfte in jedem der Stablenker nur als Zug-Druck-Belastung ohne zusätzliches Biegemoment auswirken, können sämtliche Stablenker mit geringem Materialeinsatz und somit niedrigem Gewicht darstellbar werden. Während für die Längsfederung des Rades der vertikale Abstand zwischen dem Radmittelpunkt und insbesondere den in Fahrtrichtung nach vorne gerichteten (ersten) Lenkern jeder Achsseite relevant ist, welche aus Bauraumgründen möglichst nahe der Radmitte, d.h. absolut betrachtet möglichst nahe der Fahrbahn und somit knapp oberhalb der Radmitte vorgesehen sind, sind für eine steifere Abstützung eines auf die Hinterräder des Kraftfahrzeugs wirkenden Bremsmoments aufgrund des hierbei relevanten vertikalen Abstandes zwischen dem Radaufstandspunkt und den vorrangig hierfür ausgelegten Lenkeranbindungen der anderen zweiten Lenker (je Achsseite) letztere unterhalb der Radmitte nach hinten (gegen Fahrtrichtung) ausgerichtet.

In diesem Sinne wird weiterhin vorgeschlagen, die beiden unteren nach hinten orientierten Stablenker über härtere Gummilager am FahrzeugAufbau anzubinden bzw. gelenkig mit diesem zu verbinden, als die beiden oberen nach vorne orientierten Stablenker. In anderen Worten ausgedrückt sind dann die fahrzeugaufbauseitigen Gummilager der nach vorne verlaufenden Stablenker weicher als die fahrzeugaufbauseitigen Gummilager der nach hinten verlaufenden Stablenker. Auch für ein günstiges Vorspurverhalten unter Seitenkraft sind die in Fahrtrichtung vorne liegenden fahrzeugaufbauseitigen Gummilager der Stablenker weicher ausgelegt als die hinten liegenden Gummilager bzw. als die fahrzeugaufbauseitigen Gummilager der beiden gegen Fahrtrichtung nach hinten vom Achskörper weggehenden Stablenker. Die Steifigkeiten der fahrzeugaufbauseitigen Gummilager können dabei auch zur Erzielung eines ausreichenden Impedanzsprungs (zur Reduzierung der Körperschallübertragung) möglichst niedrig gewählt werden (bspw. in der Größenordnung 0,5 bis 5 kN/mm), während die achskörperseitigen Gummilager der Stablenker, über die die Stablenker gelenkig mit dem Achskörper oder mit dem jeweiligen Radträger verbinden sind (alternativ sind hier Kugelgelenke möglich), vorzugsweise relativ steif ausgelegt sein können, bspw. in der Größenordnung 10 bis 25 kN/mm.

Durch die hier vorgeschlagene Auslegung der Gummilager-Steifigkeiten ergibt sich eine geringe Aufziehneigung der hier vorgeschlagenen Radaufhängung bei an den Rädern anliegendem Bremsmoment mit gleichzeitiger weicher Längsfederrate, bezogen auf den Radmittelpunkt, also den Angriffspunkt von Stoßkräften, die durch Fahrbahnunebenheiten wie Kanten, Fugen oder Schlaglöchern angeregt werden. Vorteilhafterweise dient ein nicht zu großer Aufziehwinkel unter einseitiger Bremskraft in Form einer Verdrehung um die Radachse als Vorspurkorrektur, indem sich ein wie üblich vorgesehener negativer Ausgangs-Radsturz (d.h. Radsturz in Konstruktionslage der Achse) durch den besagten Aufziehwinkel als Vorspuränderung in Richtung positiver Vorspur auswirkt. Dadurch ist eine für guten Fahrkomfort ausreichende Längsfederung verbunden mit stabilisierenden Vorspuränderungen unter Längs- und Seitenkräften (am Rad) gewährleistet. In diesem Sinne weisen die fahrzeugaufbauseitigen Gummilager weiterhin nichtlinear-progressive SteifigkeitsKennlinien auf, nämlich um in Konstruktionslage für eine weiche Längsfederung zu sorgen und andererseits den unter Bremsmoment auftretenden Aufziehwinkel um die Raddrehachse geeignet zu begrenzen. Dabei kann die Steifigkeit vom Nullniveau bis zu einer Lenkerkraft von 3 kN um einen Faktor in der Größenordnung zwischen 3 und 10 zunehmen.

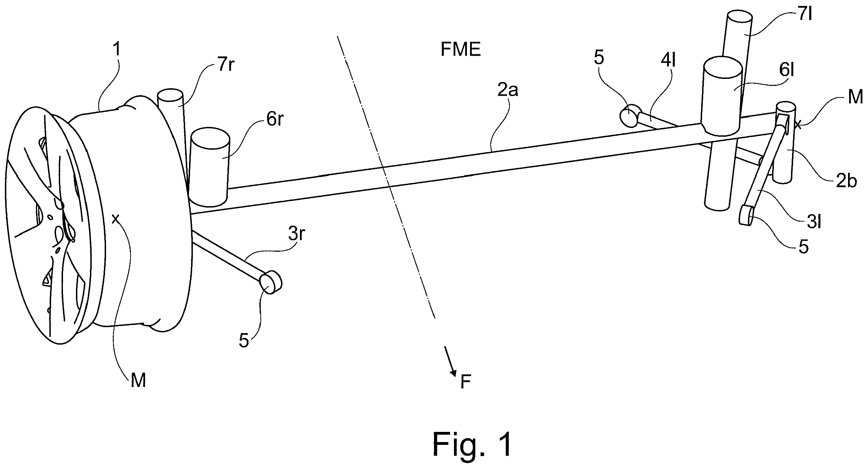

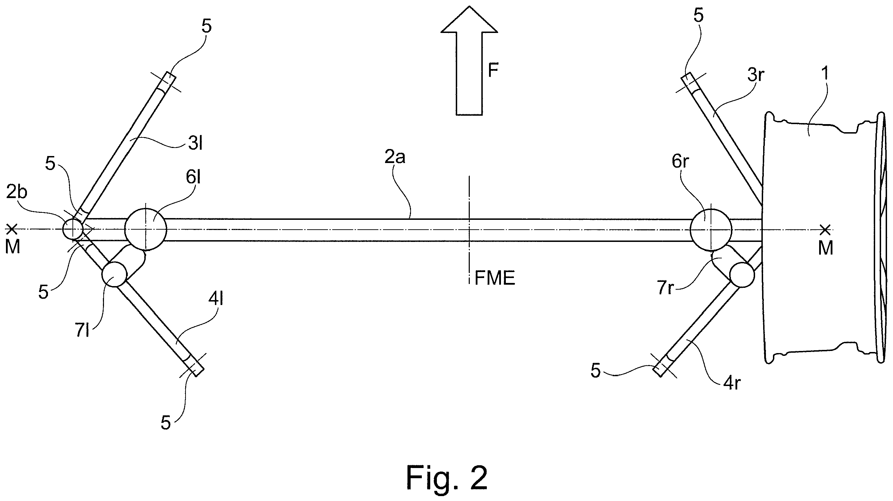

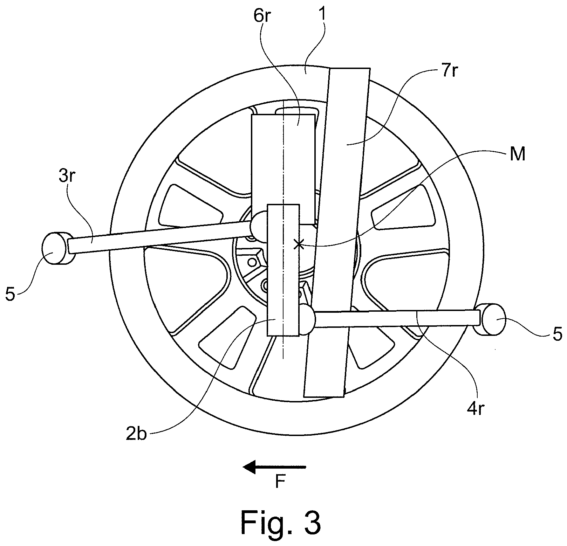

Die beigefügten Prinzipdarstellungen zeigen auf das wesentliche abstrahiert ein Ausführungsbeispiel einer erfindungsgemäßen Starrachse in räumlicher Darstellung von bezüglich des Fahrtzeugs schräg vorne links außen als **Fig.1****,** sowie in Draufsicht (auf die Fahrbahn) als **Fig.2** und in Seitenansicht als **Fig.3****,** wobei jeweils die Fahrtrichtung des Kraftfahrzeugs durch den Pfeil F verdeutlicht ist.

Die beiden Räder der als nicht angetriebene Hinterachse eines leicht bauenden Personenkraftwagens dienenden Starrachse tragen die Bezugsziffer 1 und es sind die stark abtrahiert, nämlich in Form eines Zylinders dargestellten Radträger 2b, an denen die Räder 1 drehbar gelagert sind, über einen starren Achskörper 2a miteinander verbunden bzw. es sind die Radträger 2b, auf denen jeweils eine Nabe zur Aufnahme eines Rades 1a vorgesehen ist, ein Bestandteil des zwischen den Radträgern 2b im wesentlichen geradlinigen rohrförmigen Achskörpers 2a. Gegenüber dem ebenfalls nicht gezeigten Fahrzeug-Aufbau ist dieser Achskörper 2a über insgesamt vier Stablenker 3l, 3r sowie 4l, 4r geführt, wobei der Buchstabe "l" für die linke Fahrzeugseite und der Buchstabe "r" für die rechte Fahrzeugseite steht und die linksseitigen und rechtsseitigen Stablenker 3l, 3r, 4, 4r spiegelsymmetrisch bezüglich der Fahrzeug-Mittenebene FME angeordnet sind. Sowohl am Fahrzeug-Aufbau als auch hier am jeweiligen Radträger 2b des Achskörpers 2a sind die Stablenker 3l, 3r, 4l, 4r jeweils über ein übliches, dem Fachmann bekanntes Gummilager 5 gelenkig befestigt.

Figürlich dargestellt sind weiterhin eine linksseitige bzw. rechtsseitige Tragfeder 6l bzw. 6r, über die der Fahrzeug-Aufbau anteilig auf dem Achskörper 2a abgestützt ist, sowie diesen Tragfedern 6l, 6r in ihrer Wirkung parallel geschaltete Dämpfer 7l, 7r, auf nicht dargestellte Weise ebenfalls am Achskörper 2a befestigt sind ohne diesen zu führen.

Die in Fahrtrichtung F vorderen Stablenker 3l, 3r sowie die in Fahrtrichtung F hinteren Stablenker 4l, 4r sind wie oben ausführlich beschrieben angeordnet, nämlich die in Fahrtrichtung F betrachtet vorzugsweise vor dem Mittelpunkt M des Rades 1 am Achskörper 2 angelenkten vorderen Stablenker 3l, 3r oberhalb des Mittelpunktes M (= "Radmitte") der Räder 1 bzw. oberhalb deren Drehachse oder einer durch die Radmitte M verlaufenden Horizontatebene, und die in Fahrtrichtung F betrachtet vorzugsweise hinter der Radmitte M des Rades 1 am Achskörper 2 angelenkten hinteren Stablenker 4l, 4r unterhalb des Mittelpunktes M der Räder 1 bzw. unterhalb deren Drehachse oder einer durch die Radmitte M verlaufenden Horizontalebene.

Durch die Anbindung der radführenden Stablenker 3l, 3r, 4, 4r am jeweiligen Radträger 2b des Achskörpers 2a wird dessen die besagten Radträger 2b miteinander starr verbindender rohrförmiger Abschnitt (2a) mit geringeren Kräften belastet, jedoch können abweichend vom gezeigten Ausführungsbeispiel die Stablenker selbstverständlich alternativ am rohrförmigen Abschnitt des Achsträgers 2a angelenkt sein. Insbesondere dann können die hier gegenüber der Fahrzeug-Längsachse bzw. Fahrzeug-Mittenebene FME gepfeilt und dabei zur Fahrzeugmitte bzw. Fahrzeug-Mittenebene FME hin ausgerichteten und dann ausgehend vom Achskörper 2a in bzw. gegen Fahrtrichtung F nach vorne bzw. hinten verlaufenden Stablenker auch von der Fahrzeug-Mittenebene FME nach außen weg gerichtet sein.

Durch eine vorzugsweise gerade Gestaltung der Stablenker 3l, 3r, 4l, 4r ergibt sich im Übrigen an diesen eine günstige Zug-Druckbelastung mit hoher Bauteilsteifigkeit. Zusammen mit einer kompakten Anbindung an den Fahrzeug-Aufbau und insbesondere an eine Karosserie-Längsträgerstruktur desselben wird ein hoher Steifigkeitssprung zwischen dem jeweiligen Lenker-Gummilager 5 und der Krafteinleitungsstelle in den Fahrzeugaufbau gewährleistet, was sich günstig auf die akustische Entkopplung auswirkt. Insgesamt zeichnet sich das vorgeschlagene Konzept einer Starrachse als nicht angetriebene Hinterachse eines insbesondere leicht bauenden Personenkraftwagens durch eine geringe Anzahl und eine gewichtsoptimierte Gestaltung von Bauteilen und dadurch hohes Leichtbaupotenzial bei hohem funktionalem Anspruch aus.

## Patentansprüche

1. Starrachse als nicht angetriebene Hinterachse eines Kraftfahrzeugs mit einem ausschließlich durch vier zumindest fahrzeugaufbauseitig gummigelagerte Stablenker (3l, 3,r, 4l, 4r) gegenüber dem Fahrzeugaufbau geführten, die Radträger (2b) der beiden Räder (1) verbindenden Achskörper (2a), wobei an jeder Fahrzeugseite zwei gegenüber der Fahrzeuglängsachse (FME) gepfeilte, vorzugsweise zur Fahrzeugmitte hin ausgerichtete, Stablenker (3l, 4l, 3r, 4l) solchermaßen angeordnet sind, dass die oberhalb der Radmitte (M) am Achskörper (2a) oder Radträger (2b) angelenkten Stablenker (3l, 3r) in Fahrtrichtung (F) nach vorne verlaufen,
**dadurch gekennzeichnet, dass** die unterhalb der Radmitte (M) am Achskörper (2a) oder Radträger (2b) angelenkten Stablenker (4l, 4r) gegen Fahrtrichtung (F) nach hinten verlaufen, und dass die fahrzeugaufbauseitigen Gummilager (5) der nach vorne verlaufenden Stablenker (3, 3r) weicher sind als die fahrzeugaufbauseitigen Gummilager (5) der nach hinten verlaufenden Stablenker (4l, 4r), wobei in Konstruktionslage ein negativer Radsturz eingestellt ist und die Steifigkeitskennlinien der fahrzeugaufbauseitigen Gummilager (5) einen progressiven Verlauf aufweisen, mit bei zunehmender Verformung überproportionaler Zunahme der Steifigkeit.

2. Starrachse nach Anspruch 1, wobei die oberhalb der Radmitte (M) am Achskörper (2a) oder Radträger (2b) angelenkten Stablenker (3l, 3r) vollständig oberhalb der horizontalen Radmittenebene liegen und die unterhalb der Radmitte (M) am Achskörper (2a) oder Radträger (2b) angelenkten Stablenker (4, 4r) vollständig unterhalb der horizontalen Radmittenebene liegen.

## Claims

1. A rigid axle as non-driven rear axle of a motor vehicle, comprising an axle body (2a) which is guided relative to the vehicle body exclusively by four rod links (3l, 3r, 4l, 4r) that are rubber-mounted at least on the vehicle-body side and which connects the wheel carriers (2b) of the two wheels (1), wherein two rod links (3l, 4l, 3r, 4r), which are arranged in an arrow-shaped manner pointing outwardly from the vehicle longitudinal axis (FME) and which are preferably oriented towards the vehicle centre, are arranged on each vehicle side such that the rod links (3l, 3r) hinged to the axle body (2a) or wheel carrier (2b) above the wheel centre (M) run towards the front in the driving direction (F),
**characterised in that** the rod links (4l, 4r) hinged to the axle body (2a) or wheel carrier (2b) below the wheel centre (M) run towards the rear against the driving direction (F), and **in that** the vehicle-body-side rubber mountings (5) of the rod links (3, 3r) running towards the front are softer than the vehicle-body-side rubber mountings (5) of the rod links (4l, 4r) running towards the rear, wherein a negative camber is set in the installed position and the stiffness characteristics of the vehicle-body-side rubber mountings (5) have a progressive course, with an above-proportional increase in stiffness with increasing deformation.

2. A rigid axle according to claim 1, wherein the rod links (3l, 3r) hinged to the axle body (2a) or wheel carrier (2b) above the wheel centre (M) lie completely above the horizontal centre plane of the wheel and the rod links (4, 4r) hinged to the axle body (2a) or wheel carrier (2b) below the wheel centre (M) lie completely below the horizontal centre plane of the wheel.

## Revendications

1. Essieu rigide constituant un essieu arrière non moteur d'un véhicule comportant un corps d'essieu (2a) reliant les supports de roue (2b) des deux roues (1), exclusivement articulé par rapport à la carrosserie du véhicule par quatre barres de suspension (31, 3r, 41, 4r) montées sur des paliers en caoutchouc au moins du côté de la carrosserie du véhicule, et sur chacun des côtés du véhicule étant montées deux barres de suspension (3l, 4l, 3r, 4l) inclinées par rapport à l'axe longitudinal du véhicule (FME), de préférence orientées vers le milieu du véhicule, de sorte que, les barres de suspension (31, 3rl) articulées sur le corps d'essieu (2a) ou le support de roue (2b) au-dessus du centre de la roue (M) s'étendent vers l'avant, dans la direction de déplacement (F),
**caractérisé en ce que**
les barres de suspension (41, 4r) articulées sur le corps d'essieu (2a) ou le support de roue (2b) au-dessous du centre (M) de la roue s'étendent vers l'arrière à l'opposé de la direction de déplacement (F), et les paliers en caoutchouc (5) situés côté carrosserie du véhicule des barres de suspension (3, 3r) s'étendant vers l'avant sont plus mous que les paliers en caoutchouc (5) situés côté carrosserie du véhicule des barres de suspension (41, 4r) s'étendant vers l'arrière, dans la position de construction, un départ de roue négatif étant réglé, et les courbes caractéristiques de rigidité des paliers en caoutchouc (5) situés côté carrosserie du véhicule ayant une variation progressive avec une augmentation surproportionnelle de la rigidité lorsque la déformation augmente.

2. Essieu rigide conforme à la revendication 1,
dans lequel les barres de suspension (31, 3r) articulées sur le corps d'essieu (2a) ou le support de roue (2b) au-dessus du centre (M) de la roue sont situées en totalité au-dessus du plan horizontal médian de la roue tandis que les barres de suspension (4, 4r) articulées sur le corps d'essieu (2a) ou le support de roue (2b) au-dessous du centre (M) de la roue sont situées en totalité au-dessous du plan horizontal médian de la roue.
